# EUROPEAN PATENT APPLICATION

(11) **EP 4 550 857 A1**
(43) Date of publication of application: **07.05.2025**
(21) Application number: 24209482.9
(22) Date of filing: 29.10.2024
(51) Int. Cl.: H04W 4/38, H04W 4/50

(54) **INFORMATION COMMUNICATION SYSTEM AND INFORMATION PROCESSING SYSTEM**

(30) Priority: 02.11.2023 JP 2023188761
(71) Applicant: TOYOTA JIDOSHA KABUSHIKI KAISHA, Aichi-ken, 471-8571 (JP)
(72) Inventor: SHAO, Xiao, Toyota-shi, Aichi-ken, 471-8571 (JP); FURUSAWA, Toru, Toyota-shi, Aichi-ken, 471-8571 (JP)
(74) Representative: Simmons & Simmons

(57) **Abstract**

An information communication system including a control unit configured to execute: receiving a first message requesting the number of objects that satisfy a designated condition including area information; and transmitting a second message including the number of objects satisfying the designated condition in response to the receiving of the first message.

## Description

### CROSS REFERENCE TO THE RELATED APPLICATION

This application claims the benefit of Japanese Patent Application No. 2023-188761, filed on November 2, 2023, which is hereby incorporated by reference herein in is entirety.

### BACKGROUND OF THE DISCLOSURE

### Field of the Disclosure

The present disclosure relates to an information communication system and an information processing system.

### Description of the Related Art

Patent Literature 1 discloses dynamic scale-up or scale-out of virtual servers, based on an operation policy and load conditions.

Paten Literature 1: Japanese Patent Application Publication No. 2010-33292

### SUMMARY OF THE DISCLOSURE

The present disclosure is to provide a technology enabling an object within a specific area to be appropriately recognized.

One aspect of the present disclosure is an information communication system as specified in claim 1.

Another aspect of the present disclosure is an information processing system as specified in claim 7.

According to the aspect of the present disclosure, it is possible to appropriately recognize an object within a specific area.

### BRIEF DESCRIPTION OF THE DRAWINGS

FIG. 1 is a schematic illustrating elements of an information communication system according to an embodiment;
FIG. 2 is a schematic for explaining the information communication system according to the embodiment;
FIG. 3A is a schematic illustrating an exemplary configuration of an information processing apparatus operable as an NF or an external server;
FIG. 3B is a schematic illustrating an exemplary configuration of an information processing apparatus operable as a user terminal;
FIG. 4 is a sequence chart illustrating an operation related to collecting and providing sensing data in Embodiment 1;
FIGS. 5A to 5C are schematics illustrating examples of messages for notifying the number of objects in the embodiment;
FIG. 6 is a schematic for explaining an information processing system according to Embodiment 2;
FIG. 7 is a flowchart of a resource allocation process according to Embodiment 2; and
FIGS. 8A and 8B are schematics for explaining an information processing system according to Embodiment 3.

### DESCRIPTION OF THE EMBODIMENTS

### Overview

To services such as metaverse application services that are constantly demanded to provide high-capacity data transfer and computations, it is desirable to allocate necessary and sufficient server resources to ensure stable operation. Generally, the amount of resources required increases or decreases depending on the number of users who connect to the service. With a reactive approach in which the allocations of the server resources are changed after the users connect to the server, a certain time lag is accrued before the resource allocation is completed. Therefore, the service may become unavailable to new users until the allocation is completed, or may experience congestions, so that the entire server may suffer from deterioration in the quality of services. Furthermore, if such services are allocated with server resources more than necessary in advance, although the deterioration in the quality of service can be avoided, the cost is increased.

Therefore, it is desirable to make predictions on how many users will use the server, before the users actually connect to the application server, and to complete the allocation of the resources in advance.

Meanwhile, having been experimented in the fifth-generation (5G) systems is an application of electric waves having been used for wireless communication by base stations (gNB) or user terminals (UE), for the purpose of object sensing. With such sensing, it becomes possible to sense what kind of objects are present at which locations. However, there has been no previous discussions on using such sensing in getting grasp of the number of users who are expected to connect to a server, such as that described above, and therefore, the sensing is not optimized for this purpose.

The present disclosure provides a novel method for providing sensing information in an information communication system.

One aspect of the present disclosure provides an information communication system including a control unit configured to execute: receiving a first message requesting the number of objects that satisfy a designated condition including area information; and transmitting a second message including the number of objects satisfying the designated condition in response to the receiving of the first message.

In this manner, by transmitting a second message including the number of objects that satisfy the designated condition, in response to receiving of the first message including at least area information as the designated condition, it is possible to send a notification of the number of objects within the designated area.

In another aspect of the present invention, the designated condition may include at least any one of an object type, an object shape, and an object moving speed, in addition to the area information. When an object type is used as the designated condition, one or more object types may be included as the designated condition. In this manner, it becomes possible to make a request for the number of objects belonging to the designated type of objects or a request for the number of objects other than those belonging to the designated types. When a plurality of object types are designated, the second message may notify the total number of objects that match the designated object types, or the number of objects belonging to each of the designated object types. The object shape is, typically, the size of the object, but may also be a shape type, such as a cube, a cuboid, a sphere, or a cylinder. The object size may be designated, for example, as: at least one of a width, a depth, and a height; a maximum value or a minimum value of the sum of these plurality of items; or as a range. The object moving speed may also be designated as a maximum value or a minimum value, or as a range.

In this manner, by notifying the number of objects that satisfy a designated condition, information required by the user can be appropriately provided.

In the present disclosure, for the exchange of the first message and the second message, it is possible to use Subscribe/Notify procedure or Request/Response procedure. With Subscribe/Notify procedure, the second message is transmitted when the predetermined transmission trigger is satisfied. As some example, this transmission trigger may be any one of conditions that: the number of objects is within a predetermined range; that the number of objects has changed by a predetermined amount or more; or that a certain length of time has elapsed.

In the present disclosure, the area information included as the designated condition may be an overlapping area where a first area and a second area overlap each other. In such a case, the designated condition may also include whether the direction of the movement of the object is a direction from the first area toward the second area. With this, users can get a grasp of whether an object in the overlapping area is heading from the first area to the second area, or from the second area to the first area.

In the present disclosure, the designated condition may also include a condition that the object is a user terminal under a predetermined contract. One example of the predetermined contract is a contract for the use of a wireless communication network such as a mobile communication service. Some examples of the mobile communication service include those using 5G, 4G, LTE, LTE-A, SUPER 3G, IMT-Advanced, NR systems, and next-generation systems extended on the basis of previously listed systems. Because mobile communication services are aware of position information of user terminals, by matching the object positions obtained as a sensing result with the positions of user terminals known to the core network, it is possible to determine whether an object sensed thereby is a user terminal or not.

In the present disclosure, the control unit may acquire object-related information in any way, and, as an example, the control unit may acquire sensing result from another device. Examples of the other device include a base station and a user terminal (e.g., 5G systems) as defined by the 3GPP (registered trademark). The control unit acquires the result of sensing carried out using wireless waves, from such devices. The sensing device may also be a camera or Lidar.

Another aspect of the present disclosure provides an information processing system including a plurality of servers having a dynamically allocatable resource, and a control unit configured to transmit a first message requesting the number of objects that satisfy a designated condition including area information, to receive a second message including the number of objects satisfying the designated condition, and to allocate a resource suitable for the number of objects, to a server corresponding to the area information. In configurations in which the load on a server is determined on the basis of the number of objects in the area, an appropriate amount of resource can be allocated by getting a grasp of the number of objects within the area, in the manner as in this aspect.

In this aspect, the second message may include the number of objects for each object type, and the control unit may be configured to allocate a resource suitable for the number of objects corresponding to the object type, to a server corresponding to the area information. Furthermore, in configurations in which the load on a server per object is determined on the basis of the object type, by getting a grasp of the number of objects corresponding to each of the object types, an appropriate amount of resource can be made estimated more accurately.

In this aspect, the control unit may be configured to allocate the resource based on the second message before a service of the information processing system is started. Before the start of a service, it is necessary to predict the number of user connections and to allocate the required resources. By getting a grasp of the number of objects in the area, and allocating resources suitable for the number of objects, it is possible to suppress overallocation of the resources or a shortage of the allocated resources.

The present disclosure also includes a computer program for causing a computer to execute each of the steps included in the method described above, and a computer program for implementing the network node or the information processing system described above, using a computer. The present disclosure also includes a computer-readable medium storing therein the computer program.

### FIRST EMBODIMENT

To begin with, some embodiments of the present disclosure will be explained with reference to drawings. The embodiments described below are provided for the illustrative purpose only, and the present disclosure is not limited to the configurations disclosed in the embodiments. For example, although examples in which the present disclosure is applied to a fifth-generation mobile communication system are explained in the description hereunder, the present disclosure may also be applied to a fourth-generation mobile communication system or any mobile communication system subsequent to the fifth generation. The present disclosure may be applied to any mobile communication system stipulated by any organization other than the 3GPP, to any wireless communication systems other than mobile communication systems, or to any wired communication systems.

### Configuration of Information Communication System

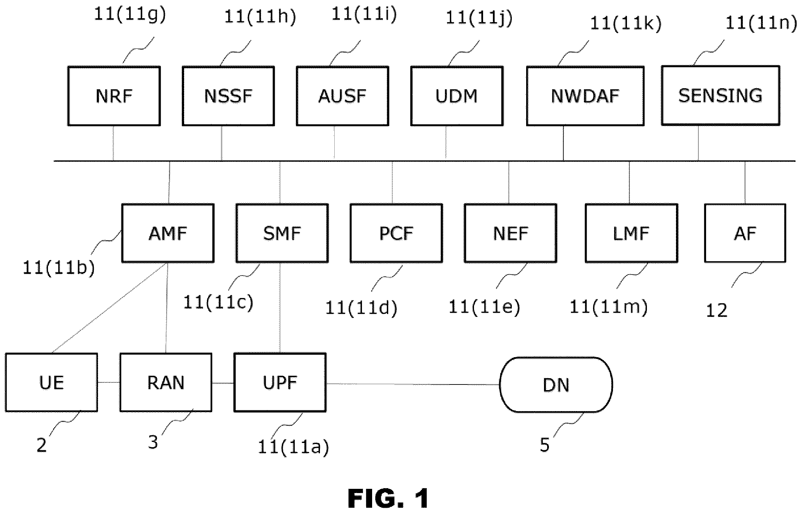

FIG. 1 illustrates components (elements) of a fifth-generation mobile communication system (5G network). In FIG. 1, user equipment (UE) 2 is a user (subscriber) terminal. A radio access network (RAN) 3 is an access network for a 5G core network (5GC). The RAN 3 is configured as a base station (gNB). The 5G network includes the 5GC and the access network ((R)AN). The UE 2, a data network (DN) 5, and an application function (AF) 12 are connected to the 5G network. Each of network functions (NFs) 11a to 11n is a function implemented by one or two or more computers (information processing apparatuses) executing a computer program. A single computer may implement two or more NFs 11a to 11n. Each of the NFs 11a to 11n may also be referred to as a network node or a network component.

The 5GC is configured as a set of components each having a predetermined function, which is referred to as an NF. In FIG. 1, the following NFs 11 are illustrated as the components of the 5GC. In FIG. 1, each of the following NFs 11 is indicated as a rectangle in a thick line.

### User Plane Function (UPF) 11a

Access and Mobility Management Function (AMF) 11b
Session Management Function (SMF) 11c
Policy Control Function (PCF) 11d
Network Exposure Function (NEF) 11e
Network Repository Function (NRF) 11g
Network Slice Selection Function (NSSF) 11h
Authentication Server Function (AUSF) 11i
Unified Data Management (UDM) 11j
Network Data Analytics Function (NWDAF) 11k
Sensing Function (SENSING) 11n

The UPF 11a performs routing and forwarding of user packets (user plane packets transmitted by or received from the UE 2), packet inspection, and quality-of-service (QoS) processing.

The AMF 11b is a device for bundling UEs in the corresponding area of the 5GC. The AMF 11b performs bundling of the RAN 3, subscriber authentication control, and position (mobility) management of the UE 2.

The SMF 11c manages Protocol Data Unit (PDU) sessions, and controls the UPF 11a to enforce the QoS control and the policy control. A PDU session is a virtual communication channel for exchanging data between the UE 2 and the DN 5. The DN 5 is a data network outside the 5GC (e.g., the Internet).

The PCF 11d performs QoS control, policy control, and billing control, under the control of the SMF 11c. The QoS control controls the quality of communication such as prioritization of packet transfers. The policy control performs communication control such as QoS, packet admissions, and billing, on the basis of network or subscriber information.

The NEF 11e serves as an intermediator between an external node, such as the AF 12, and the nodes in the control plane. The AF 12 is an application server (external server) providing an auxiliary service other those in the 5GC specification.

The NRF 11g stores therein and manages information related to the NFs (e.g., the AMF, the SMF, and the UPF) in the 5GC. The NRF 11g is capable of, in response to an inquiry related to an NF the use of which is requested, responding with a plurality of NF candidates to the inquirer.

The NSSF 11h has a function for selecting a network slice to be used by a subscriber, among those generated by network slicing. A network slice is a virtual network having a specification suitable for a use.

The AUSF 11i is a subscriber authentication server that authenticates the subscribers under the control of the AMF 11b.

The UDM 11j retains subscriber-related information, and provides subscriber information, acquires, registers, deletes, or changes the status of the UE 2.

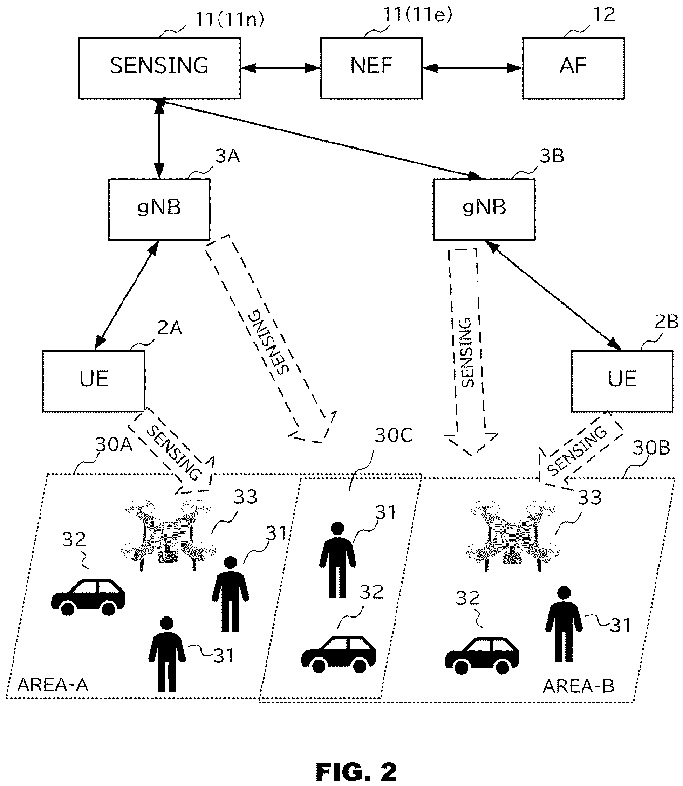

The NWDAF 11k has a function for collecting and analyzing data from each of the NFs 11, an OAM terminal 8 (FIG. 2), external servers, or the like, and is an NF for providing network analysis information.

The SENSING 11n provides sensing services including collecting sensing information from the UE 2 or other external systems, and providing the collected sensing information to the UE 2 or the other external systems (such as the AF 12 or the DN 5) .

The AF 12 is a network node having a function for controlling an application server (external server) outside the 5GC. An example of the application server is a server for providing sensing measurement data or for providing a service that is based on the sensing measurement data, to the UE 2 or other devices.

In the 5GC, a plurality of the same type of NFs may be prepared. For example, the NF 11 may be provided for each of a plurality of data centers (station buildings). Furthermore, one NF 11 may be shared between a plurality of data centers. Furthermore, one data center may configure a plurality of NFs 11 of the same type. The number of data centers, the number of NFs 11, and a corresponding relationship between the NFs 11 and the data centers may be set as appropriate.

FIG. 2 is a schematic for explaining the information communication system according to the embodiment. The SENSING 11n receives a result of sensing the area A (30A) from a gNB 3A or UE 2A, or receives a result of sensing the area B (30B) from a gNB 3B or UE 2B. The gNB 3A and gNB 3B (hereinafter, sometimes collectively referred to as gNBs 3) can sense objects along the propagation path of an electric wave, by transmitting an electric wave and receiving a reflection wave thereof, or by receiving an electric wave transmitted from a wireless transmitter installed at a fixed position. In the same manner, the UE 2A and the UE 2B (hereinafter, sometimes collectively referred to as UEs 2) can sense objects on the propagation path of an electric wave, by transmitting an electric wave and receiving the reflection wave thereof, or by receiving an electric wave transmitted from a wireless transmitter installed at a fixed position. On the basis of the received electric waves, the gNBs 3 and the UEs 2 may obtain the position, the type, the shape, the size, or the moving speed of an object. Alternatively, the gNBs 3 and the UEs 2 may also transmit received signals to the SENSING 11n or another entity, and cause the SENSING 11n or the other entity to analyze the reception signal and to obtain the position, the type, the shape, the size, or the moving speed of the object.

In the example illustrated in FIG. 2, each of the areas includes pedestrians 31, vehicles 32, and a drone (UAV) 33. The SENSING 11 can get grasp of the number of objects in each of the area A and the area B, for each of the object types, that is, the number of the pedestrians 31, the number of the vehicles 32, and the number of the drones 33, on the basis of the information received from the gNBs 3A, 3B and the UEs 2A, 2B. Therefore, the SENSING 11n can notify the number of objects in the designated area, for each of the object types, in response to a request from the AF 12.

In FIG. 2, the gNB 3A performs sensing of the area A, and the gNB 3B performs sensing of the area B. However, a plurality of gNBs may perform sensing of one area, or one gNB may perform sensing of a plurality of areas. In the same manner, a plurality of UEs may perform sensing of one area, or one UE may perform sensing of a plurality of areas.

The SENSING 11n may notify the direction of the movement of the object to the AF 12. For example, the SENSING 11n may notify the direction of the movement of the object in an area C (30C) where the area A and the area B overlap. The direction of the movement may be expressed using the cardinal directions, or as a direction in which the object is moving in the overlapping area, e.g., from the area A to the area B, or from the area B to the area A.

### Configurations of Information Processing Apparatus and Terminal

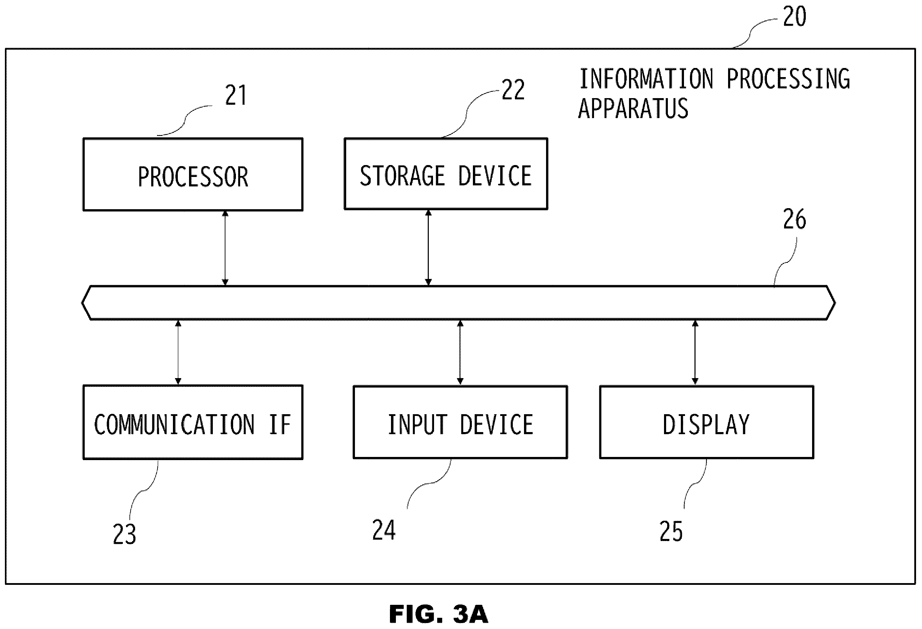

FIG. 3A is a schematic illustrating an exemplary configuration of an information processing apparatus operable as each of the NFs 11a to 11k and external servers. In FIG. 3A, this information processing apparatus 20 may be configured using a dedicated or general-purpose information processing apparatus (computer), such as a personal computer (PC), a workstation (WS), or a server machine. The information processing apparatus 20 may also be a set of one or two or more computers (cloud).

The information processing apparatus 20 includes a processor 21, a storage device 22, a communication interface (IF) 23, an input device 24, and a display 25, each serving as a processing unit or a control unit (controller) connected to the others over a bus 26.

The storage device 22 includes a main memory and an auxiliary memory. The main memory is used as at least one of: a storage area of a computer program and data; an area where the computer program is loaded; as a working area of the computer program; and as an area for buffering communication data. The main memory is configured as a random access memory (RAM), or a combination of a RAM and a read-only memory (ROM). The auxiliary memory is used as an area for storing data and computer programs. As the auxiliary memory, a non-volatile storage medium is used. Examples of a non-volatile storage medium include a hard disk, a solid-state drive (SSD), a flash memory, and an electrically erasable programmable read-only memory (EEPROM). The storage device 22 may also include a drive device for a disk recording medium.

The communication IF 23 is a circuit for performing communication processing. For example, the communication IF 23 is a network interface card (NIC). The communication IF 23 may be a wireless communication circuit for performing wireless communication (e.g., via 5G, wireless LAN (Wi-Fi (registered trademark)), or BLE). The communication IF 23 may also be a combination of a circuit for performing wired communication processing, and a wireless communication circuit.

The input device 24 includes a key, a button, a pointing device, and a touch panel, for example, and used in inputting information. The display 25 is, for example, a liquid crystal display, and displays information and data.

The processor 21 performs various types of processing, by executing various computer programs stored in the storage device 22. By causing the processor 21 to execute a computer program stored in the storage device 22, the information processing apparatus 20 can operate as each of the NFs 11a to 11k, the OAM terminal 8, and external servers 12a and 12b.

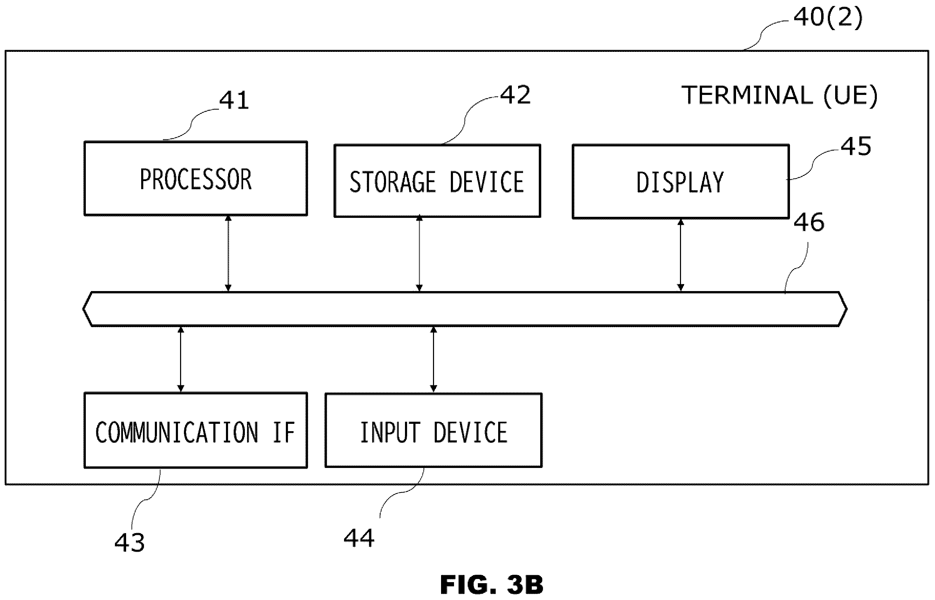

FIG. 3B is a schematic illustrating an exemplary configuration of a terminal 40 operable as the UE 2. The terminal 40 includes a processor 41, a storage device 42, a communication interface (IF) 43, an input device 44, a display 45 each of which is connected to the others over a bus 46. As the processor 41, the storage device 42, the communication IF 43, the input device 44, and the display 45, those used for the processor 21, the storage device 22, the communication IF 23, the input device 24, and the display 25 may be used. Therefore, explanations thereof will be omitted.

Each of the processors 21 and 41 is a central processing unit (CPU), for example. CPUs are also referred to as microprocessor units (MPUs). Each of the processors 21 and 41 may have a configuration including a single processor or multiple processors. Furthermore, each of the processors 21 and 41 may be one physical CPU that is connected by a single socket but has multiple cores. Each of the processors 21 and 41 may also include a processor having a circuit architecture of various types, e.g., a digital signal processor (DSP) or a graphics processing unit (GPU). Furthermore, each of the processors 21 and 41 may have a configuration interoperating with at least one of circuits including an integrated circuit (IC), other types of digital circuit, and an analog circuit. Integrated circuits include a large-scale integration (LSI), an application-specific integrated circuit (ASIC), and a programmable logic device (PLD). One example of a PLD is a field-programmable gate array (FPGA). Examples of each of the processors 21 and 41 also include a microcontroller (MCU), a system-on-a-chip (SoC), a system LSI, and a chipset.

### Operation Example: Sensing Data Providing Processing

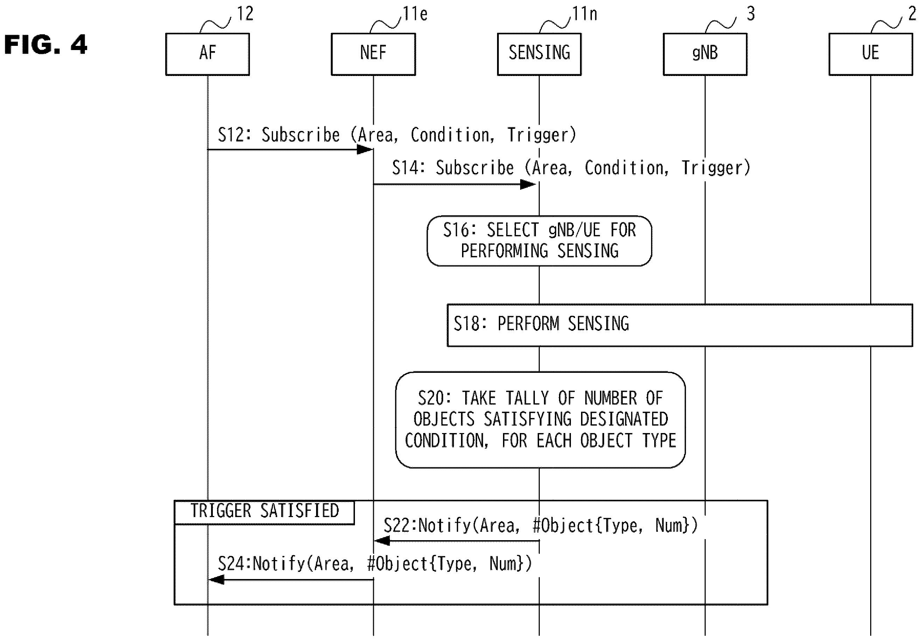

FIG. 4 is a sequence chart illustrating one example of an operation related to collecting and providing sensing data, according to the aspect of the present disclosure. The illustrated sequence chart is merely one example, and the operation may include processing other than that illustrated; a part of the illustrated processing may be skipped, or steps included the illustrated processing may be performed in a different order. Furthermore, in the example illustrated in FIG. 4, data is provided using Subscribe/Notify procedure, but the data may be provided using Request/Response procedure.

At Step S12, the AF 12 transmits a SUBSCRIBE message for subscribing sensing data of the SENSING 11n, to the NEF 11e. This SUBSCRIBE message corresponds to the first message in the present disclosure.

The SUBSCRIBE message includes a designated condition for the sensing data subjected to the subscription. The designated condition includes at least one of area information, object type, object shape, and object moving speed. The area information is a designation of the area for which the sensing data is to be notified, and may be expressed in the longitude-latitude format, or using a predefined area ID. The object type specifies the type of objects for which the sensing data is to be notified. A typical example of the object shape is the object size. The size of objects for which a notification is to be issued may be designated as a lower bound, an upper bound, or a range. The object shape may also be designated as a shape type, such as a cube, a cuboid, a sphere, or a cylinder. The object moving speed may be designated as a lower bound, an upper bound, or a range of the object moving speeds for which a notification is to be issued, in the same manner as for the object size.

The SUBSCRIBE message also includes a condition related to a trigger for receiving a notification. The trigger may be any trigger, and examples of the trigger include following conditions: that the number of objects has reached a predetermined range; that the number of objects has changed by a predetermined increment or more from that of when the last notification is made; or that a certain length of time has elapsed from when the last notification is made.

At Step S14, the NEF 11e transmits the SUBSCRIBE message received from the AF 12 to the SENSING 11n.

At Step S16, the SENSING 11n selects a gNB and/or UE for sensing the area included in the SUBSCRIBE message. The SENSING 11n can make this selection on the basis of the AMF 11b or an LMF 11m.

At Step S18, sensing processing is performed between the SENSING 11n, and the selected gNB 3 and UE 2. For example, the SENSING 11n transmits a request for performing sensing to the gNB 3 and the UE 2 selected at Step S16. The gNB 3 and the UE 2 having received the request then transmit sensing results or sensing signals to the SENSING 11n, on the regular basis, or every time an object is sensed. From these pieces of information, the SENSING 11n can obtain sensing results, e.g., what kind of objects are which locations. Typically, the sensing result includes the position of an object, the type of the object, the shape of the object, the direction in which the object is moving, and the speed at which the object is moving. Analysis of the sensing result may be performed by the gNB 3 and the UE 2, the SENSING 11n, or any other entity.

At Step S20, the SENSING 11n takes a tally of the number of objects satisfying the designated condition, for each of the object types. When conditions other than the area are designated as the designated condition, the SENSING 11n may also take a tally of the number of objects for each of such conditions.

Upon satisfaction of the transmission trigger condition, the SENSING 11n transmits the tally of the sensed objects to the AF 12. Specifically, a notification message is transmitted from the SENSING 11n to the NEF 11e at Step S22, and, on the basis of the notification message, another notification message is transmitted from the NEF 11e to the AF 12 at Step S24. The notification message includes information of the sensed area, and the number of objects corresponding to each of the object types in the area, for example. These notification messages correspond to the second message according to the present disclosure.

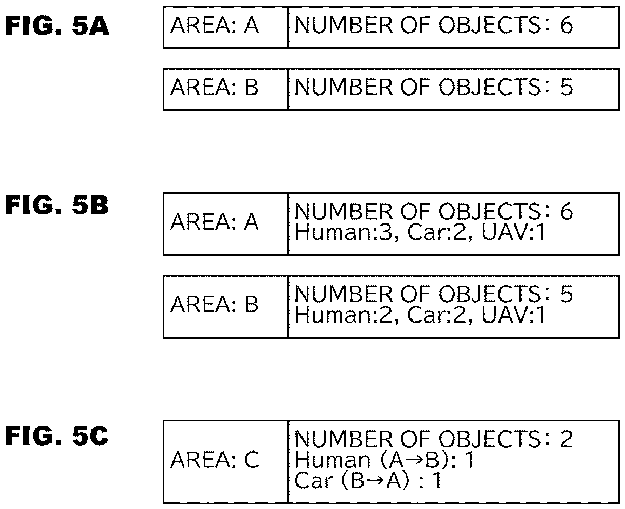

FIGS. 5A to 5C illustrate examples of the information included in notification messages in the setting illustrated in FIG. 2. FIG. 5A illustrates an example of a message for notifying that there are six objects in total in the area A, and an example of a message for notifying that there are five objects in total in the area B. FIG. 5B illustrates an example of a message for notifying that there are six pedestrians, two vehicles, and one drone, totaling to six objects in the area A, and an example of another message notifying that there are two pedestrians, two vehicles, and one drone, totaling to five objects in the area B. FIG. 5C illustrates an example of a message notifying that there is one pedestrian moving in the direction from the area A to the area B, and one vehicle moving in the direction from the area B to the area A, that is, totaling to two objects in the area C that is an area where the area A and the area B overlap each other.

When the designated condition designates a user terminal or a user who is under a contract for the use of the 5G cellular service as a target of sensing, the SENSING 11n determines whether the sensed object is a user terminal or a user who is under the contract at the Step S20. Specifically, the SENSING 11n issues inquiry to the AMF 11b or the LMF 11m as to whether there is any user terminal under a service contract, at the position of the object acquired from the gNB 3 or the UE 2. If a response indicating that there is a user terminal at that position is received, it can be determined that the sensed object is a user terminal or a user carrying the user terminal under the contract for the use of the 5G cellular service. In this manner, the SENSING 11n can make a notification of the number of user terminals or users who are under the contract for the use of the 5G cellular service.

In the embodiment described above, the SENSING 11n acquires the sensing result from the gNB 3A or the UE 2A, but the SENSING 11n may also acquire the sensing result from a non-3GPP device such as a camera (including any camera such as a visible light camera or an infrared camera) or a Lidar. There is no any particular limitation as to the way in which the SENSING 11n acquires the sensing result.

### SECOND EMBODIMENT

This embodiment provides an information processing system that uses the information communication system according to Embodiment 1 in allocating the resources to servers.

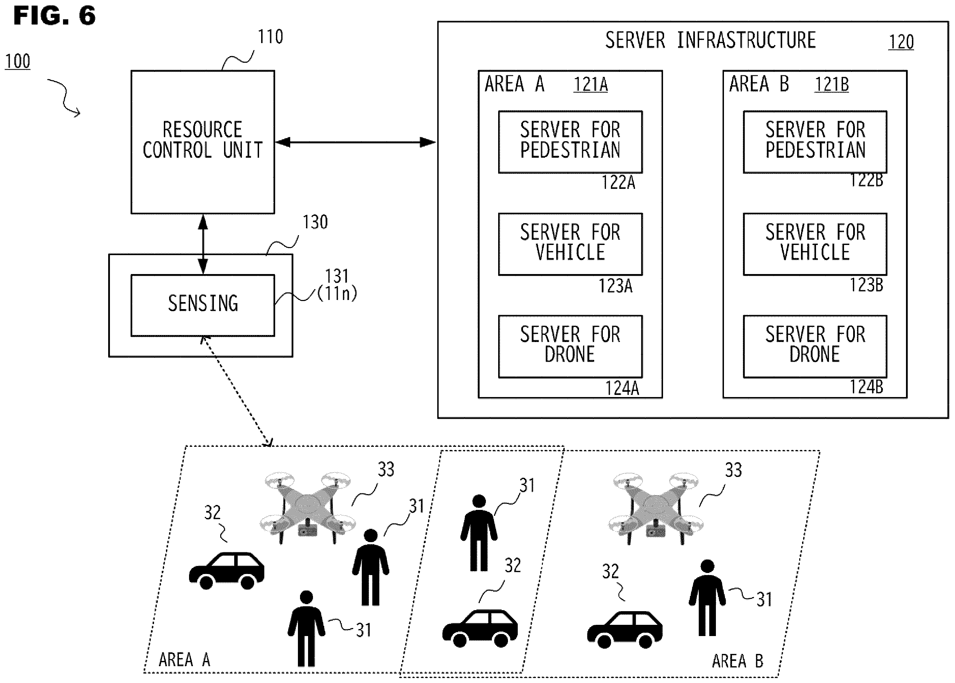

FIG. 6 is a schematic illustrating a configuration of an information processing system 100 according to the embodiment. The information processing system 100 includes a resource control unit 110 and a server infrastructure 120. The information processing system 100 is a system for providing a service such as a metaverse application service, and dynamically allocates the resources of the server infrastructure 120 to and uses the resources in various types of server processing.

A metaverse application service is a service for reproducing the real space in a virtual space, and, in this embodiment, it is assumed that service users are pedestrians 31, vehicles 32, and drones (UAVs) 33, as illustrated in FIG. 6. The target area includes the area A and the area B. On the server infrastructure 120, a pedestrian processing server 122A, a vehicle processing server 123A, and a drone processing server 124A are used in performing processing for the pedestrians, the vehicles, and the drones in the area A, respectively, and a pedestrian processing server 122B, a vehicle processing server 123B, and a drone processing server 124B are used in perform processing for the pedestrians, the vehicles, and the drones in the area B, respectively. The amount of resources required by each of these servers depends on the number of service users in the corresponding area. In the example herein, it is assumed that the pedestrians, the vehicles, and the drones in each of the areas are all service users. Under these assumptions, the amount of resources required by each of the servers changes depending on the number of the objects of each of these types, in each of the areas. Efficient use of the resources becomes possible by calculating and allocating necessary and sufficient amount of resources.

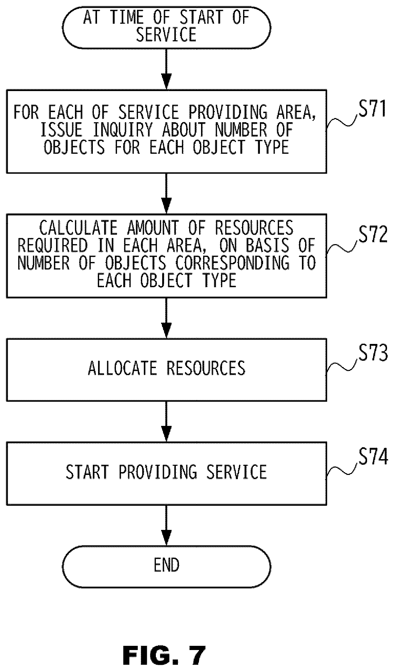

FIG. 7 is flowchart illustrating processing performed by the information processing system 100 at the time of the start of a metaverse application service in the embodiment.

At Step S71, the resource control unit 110 inquires a SENSING 131 of the number of objects for each of the pedestrians, vehicles, and drones that are in the area A and the area B, using the method explained in Embodiment 1, and acquires the numbers of objects. This request may be made with Subscribe/Notify procedure or Request/Response procedure.

At Step S72, the resource control unit 110 calculates the amount of resources required on each of the servers, on the basis of the number of objects in each of the areas and the number of objects corresponding to each of the object types. The resources herein are at least one of computational resources, memory resources, and communication resources, for example. The objects that are in the overlapping area C may be included in the calculation of the amount of resources required in the server for the area A and the calculation of the amount of resources required in the server for the area B. Alternatively, when it can be identified that the object in the overlapping area C is moving toward the area A or toward the area B, the object may be used in the calculation of the resources required in the server belonging to the destination area.

At Step S73, the resource control unit 110 requests the server infrastructure 120 to allocate resources to the respective servers in the calculated amounts, respectively.

At Step S74, the resource control unit 110 starts the operations of the servers, to start the service.

The same method may also be used in controlling the amount of allocated resources after the service is started. After the service is started, the amount of resources may be adjusted to ensure a predetermined margin with respect to the amount of resources that are currently in need. In such a case, monitoring of an increase or a decrease in the number of objects may be continued using the SENSING 131, after the start of the service, because a sudden increase in the number of objects invites a sudden increase in the required amount of resources.

According to this embodiment, it is possible to get a grasp of the required amount of resources to be prepared on the server before any service user connects to the server. Therefore, necessary and sufficient amount of resources can be ensured after the service is started, for example.

### THIRD EMBODIMENT

Disclosed in this embodiment provides an information processing system in which the information communication system according to Embodiment 1 is used in edge discovery in edge computing (Multi-Access Edge Computing (MEC)).

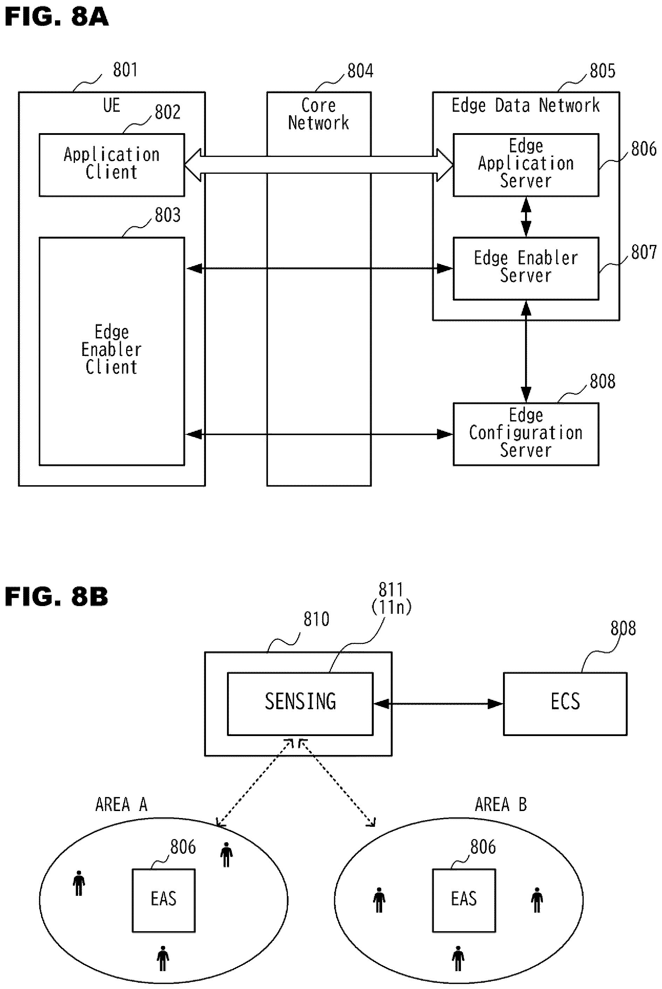

FIG. 8A is a schematic illustrating an exemplary configuration of an information processing system 800 according to the embodiment. The information processing system 800 includes UE 801, a core network 804, an edge data network (EDN) 805, and an edge configuration server (ECS) 808. The UE 801 includes an application client (AS) 802 and an edge enabler client (EEC) 803. The EDN 805 includes an edge application server (EAS) 806 and an edge enabler server (EES) 807. The EAS 806 registers to the EES 807, and the EES 807 registers to the ECS 808. The EES 807 has functions for provisioning setting information to the EEC 808, and for registering the EEC 808 and the EAS 806. The EAS 806 has functions for acquiring configuration information enabling the communication between the AC 801 and EAS 806, and for discovering the EAS 806. The ECS 808 supports the interoperation between the EEC 803 and the EES 807.

FIG. 8B is a schematic for explaining an interoperation between the information processing system 800 and a 5G core 810. The ECS 808 requests the number of objects that are present in the area near where the EAS 806 is installed (service area), from SENSING 811 (11n) included in the 5G core 810, using the method described in Embodiment 1. The ECS 808 performs EAS discovery, while giving a consideration to the number of objects near the EAS 806 into consideration. In the EAS discovery, the distance and a communication delay between the UE 801 and the EAS 806, and load on the EAS 806 are taken into account. The load on the EAS 806 may be determined on the basis of the number of objects near the EAS 806. Alternatively, the EAS discovery may be performed, while taking the number of objects near the EAS 806 into account, in addition to the load on the EAS 806.

### Other Modifications

The above embodiments have been explained for the illustrative purpose only, and the present disclosure may be implemented in a manner modified as appropriate, within the scope not deviating from the essence thereof.

In the embodiments described above, the data provided and used by the user terminal is the sensing measurement data measured by the user terminal. However, the data provided and used by the user terminal may be sensing measurement data measured by anything other than the user terminal, or may be any data other than sensing measurement data.

In the embodiments described above, Subscribe/Notify procedure is used to provide data to the user terminal, but Request/Response procedure may also be used.

In the embodiments described above, incentives are granted for providing data, and fees are invoiced for use of data, but it is also possible not to invoice the fees for the use of data. When no fee is invoiced to the use of data, generation of CDR pertinent to the data use may be skipped (Step S30); however, it is preferable to generate CDR related to the data usage, in order to grant incentives for the past use of data. It is not necessary to identify the user terminal having used the data only the purpose of granting the incentive for the past use of data; therefore, it is possible for the CDR for the data usage not to include the identifier of the second user terminal.

The present disclosure may be implemented by supplying a computer program implementing the functions explained in the embodiments to a computer, and by causing one or more processors included in the computer to read and to execute the computer program. Such a computer program may be provided to a non-temporary computer-readable storage medium connectable to the system bus of the computer, or provided to the computer over a network. Examples of the non-temporary computer-readable storage medium include disks of any type such as a magnetic disk (such as a floppy (registered trademark) disk and a hard disk drive (HDD)), and an optical disk (such as a CD-ROM, a DVD disk, and a Blue-ray disk), a read-only memory (ROM), a random access memory (RAM), an EPROM, an EEPROM, a magnetic card, a flash memory, an optical card, or any type of medium suitable for storing therein electric instructions.

## Claims

1. An information communication system comprising a control unit configured to execute:
receiving a first message requesting the number of objects that satisfy a designated condition including area information; and
transmitting a second message including the number of objects satisfying the designated condition in response to the receiving of the first message.

2. The information communication system according to claim 1, wherein the designated condition includes at least any one of an object type, an object shape, and an object moving speed, in addition to the area information.

3. The information communication system according to claim 1 or 2, wherein
the first message includes information related to a transmission trigger for the second message,
the control unit transmits the second message when the transmission trigger is satisfied, and
the transmission trigger is any one of conditions that: the number of objects is within a predetermined range; the number of objects has changed; or a certain length of time has elapsed.

4. The information communication system according to any one of claims 1 to 3, wherein
the area information is of an overlapping area where a first area and a second area overlap each other, and
the designated condition includes whether a direction of movement of an object is a direction from the first area toward the second area.

5. The information communication system according to any one of claims 1 to 4, wherein the designated condition includes a condition that the object is a user terminal under a predetermined contract.

6. The information communication system according to any one of claims 1 to 5, wherein the control unit acquires object-related information sensed by another device, and transmits the second message based on the acquired information.

7. An information processing system including a plurality of servers having a dynamically allocatable resource, the information processing system comprising a control unit configured:
to transmit a first message requesting the number of objects that satisfy a designated condition including area information;
to receive a second message including the number of objects satisfying the designated condition; and
to allocate a resource suitable for the number of objects, to a server corresponding to the area information.

8. The information processing system according to claim 7, wherein
the second message includes the number of objects for each object type; and
the control unit is configured to allocate a resource suitable for the number of objects corresponding to the object type, to a server corresponding to the area information.

9. The information processing system according to claim 7 or 8, wherein the control unit is configured to allocate the resource based on the second message before a service of the information processing system is started.
